# EUROPÄISCHE PATENTSCHRIFT

(11) **EP 2 680 034 B1**
(45) Veröffentlichungstag und Bekanntmachung des Hinweises auf die Patenterteilung: **10.09.2014**
(21) Anmeldenummer: 12176378.3
(22) Anmeldetag: 13.07.2012
(51) Int. Cl.: G01S 17/32, G01S 7/491

(54) **Optoelektronischer Sensor und Verfahren zur Entfernungsmessung von Objekten**
Capteur optoélectronique et procédé destiné à la mesure d'éloignement dýobjets
Optoelectronic sensor and method for detecting the distance of objects

(30) Priorität: 26.06.2012 EP 12173645
(43) Veröffentlichungstag der Anmeldung: 01.01.2014
(73) Patentinhaber: SICK AG, 79183 Waldkirch (DE)
(72) Erfinder: Hug, Gottfried, 79183 Waldkirch (DE)
(74) Vertreter: Hehl, Ulrich

(56) Entgegenhaltungen:
- WO-A2-2011/101627
- DE-A1-102009 029 372
- DE-B4- 10 350 489
- US-B1- 7 301 608
- AULL B F ET AL: "Geiger-mode avalanche photodiodes for three-dimensional imaging", THE LINCOLN LABORATORY JOURNAL, NEW YORK,NY, US, Bd. 13, Nr. 2, 1. Januar 2002 (2002-01-01) , Seiten 335-350, XP002312996,

## Beschreibung

Die Erfindung betrifft einen optoelektronischen Sensor und ein Verfahren zur Entfernungsmessung von Objekten in einem Überwachungsbereich nach dem Oberbegriff von Anspruch 1 beziehungsweise 11.

Optoelektronische Distanzsensoren nach dem Lichtlaufzeitprinzip bestimmen die Entfernung zu einem Objekt anhand der Laufzeit eines Lichtsignals, die über die Lichtgeschwindigkeit der Entfernung entspricht. Man unterscheidet herkömmlich die pulsbasierte und die phasenbasierte Messung. In einem Pulslaufzeitverfahren wird ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Grenze zwischen den beiden Verfahren lässt sich aber nicht immer scharf ziehen, denn etwa bei komplexen Pulsmustern wird ein Pulslaufzeitverfahren einem Phasenverfahren ähnlicher als einer klassischen Einzelpulsmessung.

Optoelektronische Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Abstand zwischen Lichtsender und Reflektor überwacht wird. Das Lichtlaufzeitverfahren ist auch das Prinzip, nach dem entfernungsmessende Laserscanner arbeiten, deren Fahrstrahl eine Linie oder sogar eine Fläche ausmisst.

Die Auswertung des Empfangslichts zur Bestimmung der Lichtlaufzeit ist eine anspruchsvolle Aufgabe. Soll die Auflösung der Entfernungsmessung eine Genauigkeit im Bereich einiger zehn Millimeter erreichen, so muss die Signallaufzeit bereits in einer Größenordnung von hundert Pikosekunden genau bestimmt werden. Um eine Distanzauflösung von einem Millimeter zu erreichen, müssen sogar sechs Pikosekunden messtechnisch erfasst werden. Eine weitere Schwierigkeit ist, dass je nach Objektentfernung nur eine sehr geringe Menge an Nutzlicht zum Sensor zurückkommt, die einer hohen Verstärkung bedarf. Zudem wird dieses Nutzsignal häufig von einem durch Umgebungslicht und andere Störquellen verursachten Rauschen überlagert, wobei das Rauschniveau das Nutzsignal durchaus erreichen oder sogar deutlich übertreffen kann.

Um auch geringe Empfangsintensitäten nachweisen zu können, werden herkömmlich in manchen optoelektronischen Entfernungssensoren Lawinenphotodioden eingesetzt (APD, Avalanche Photo Diode). Das einfallende Licht löst hier einen kontrollierten Lawinendurchbruch (Avalanche Effect) aus. Dadurch werden die durch einfallende Photonen erzeugten Ladungsträger vervielfacht, und es entsteht ein Photostrom, der zu der Lichtempfangsintensität proportional, dabei aber wesentlich größer ist als bei einer einfachen PIN-Diode.

Die DE 103 50 489 B4 beschreibt einen derartigen optischen Sensor zur Bestimmung von Distanzen von Objekten. Dessen Sendesignal wird mit einer ersten Frequenz moduliert und in einer Lawinenphotodiode registriert. Ein Signal einer zweiten Frequenz wird in die Lawinenphotodiode eingekoppelt. Somit erfolgt in der Lawinenphotodiode eine Mischung der beiden Frequenzen, und es entsteht nach Filterung in einem Tiefpass ein niederfrequentes Messsignal mit einer Zwischenfrequenz. Lawinenphotodioden werden unter einer Hochspannung von bis zu mehreren hundert Volt betrieben. Auch die Modulation dieser Hochspannung durch die zweite Frequenz muss deshalb, um merkliche Auswirkungen zu haben, mit einer hohen Spannung erfolgen. Dafür wird eine aufwändige Ansteuerung benötigt, welche die Herstellkosten in die Höhe treibt. Trotzdem bleibt die erreichbare Verstärkung in der Lawinenphotodiode relativ gering.

In der Arbeit von Aull et al., "Geiger-Mode Avalance Photodiodes for Three Dimensional Imaging", Lincoln Laboratory Journal 13(2), 2002, Seiten 335-350, wird die Verwendung von Lawinenphotodioden im sogenannten Geiger-Modus für Laserradar diskutiert. Im Geiger-Modus ist die Lawinenphotodiode oberhalb der Durchbruchspannung vorgespannt, so dass bereits ein einziger, durch ein einzelnes Photon freigesetzter Ladungsträger eine Lawine auslöst, die dann aufgrund der hohen Feldstärke sämtliche verfügbaren Ladungsträger rekrutiert. Die Lawinenphotodiode zählt somit wie der namensgebende Geigerzähler Einzelereignisse. Durch dieses quasi digitale Empfangsverhalten verliert die Lawinenphotodiode aber die Fähigkeit, ein der einfallenden Lichtintensität proportionales Signal auszugeben. Damit erscheint sie für jegliche Bewertung einer Amplitudenmodulation von Empfangslicht, einschließlich eines Einsatzes als Mischer wie in der DE 103 50 489 B4, zunächst völlig ungeeignet.

Die DE 10 2009 029 372 A1 offenbart eine optische Entfernungsmessvorrichtung durch Bestimmung einer Flugzeit aus einem Phasenunterschied zwischen ausgesandter und detektierter Messstrahlung. Dabei weist der Detektor eine Vielzahl von Pixeln und jedes Pixel mindestens eine lichtempfindliche SPAD (single photon avalanche photodiode) auf. Die Detektionssignale können für die Entfernungsbestimmung aufsummiert werden.

Aus der WO2011/101 627 A2 ist eine Fluoreszenzmessung bekannt, bei der in einer Ausführungsform mit einer ersten Frequenz moduliertes Sendelicht auf eine Probe gestrahlt wird. Dort wird mit einer Modulation der ersten Frequenz Fluoreszenzlicht angeregt, jedoch mit einem Phasenversatz aufgrund des Fluoreszenzverhaltens. Dieses Fluoreszenzlicht wird in einer SPAD registriert, deren Vorspannung mit einer zweiten Frequenz moduliert wird. Das Ausgangssignal der SPAD wird dann in einem heterodynen Messansatz in einem Frequenzbereich der Differenzfrequenz von erster Frequenz und zweiter Frequenz ausgewertet.

Es ist daher Aufgabe der Erfindung, den Aufbau eines gattungsgemäßen optoelektronischen Sensors zur Entfernungsmessung zu vereinfachen.

Diese Aufgabe wird durch einen optoelektronischen Sensor und ein Verfahren zur Entfernungsmessung von Objekten in einem Überwachungsbereich nach Anspruch 1 beziehungsweise 11 gelöst. Dabei geht die Erfindung von dem Grundgedanken aus, eine Lawinenphotodiode im Geiger-Modus zu betreiben. Durch Zusammenschalten einer Vielzahl von Lawinenphotodiodenelementen wird durch Mittelungseffekte auch im Geiger-Modus letztlich ein lineares Verstärkungsverhalten erreicht. Zwar enthält das einzelne Signal eines Lawinenphotodiodenelements wegen der nur noch von Systemeigenschaften bestimmten Lawinen keine Informationen über die Intensität des auslösenden Ereignisses. Das gemeinsame Signal, insbesondere ein Summensignal, verändert sich jedoch aufgrund der Wahrscheinlichkeiten der jeweils in den einzelnen Lawinenphotodiodenelementen ausgelösten Lawinen je nach Lichteinfall. Deshalb kann auch im Geiger-Modus der Lichtempfänger als Mischer fungieren, indem die Vorspannung der Lawinenphotodiodenelemente moduliert wird.

Die Erfindung hat den Vorteil, dass eine Distanzmessung mit sehr wenigen Bauteilen und damit ausgesprochen kostengünstig ermöglicht wird. Zahlreiche Bauelemente, wie Hochspannungsversorgung, Verstärker, Filter und dergleichen, die in einem herkömmlichen Sensor mit Lawinenphotodioden notwendig sind, können eingespart werden. Eine Übersteuerung im üblichen Sinne ist nicht möglich, weil der Lawineneffekt in einem Lawinenphotodiodenelement, sobald er einmal ausgelöst wurde, stets zu dem gleichen Signal führt. Dadurch entsteht eine hohe Robustheit beispielsweise gegenüber glänzenden Oberflächen. Das System ist insgesamt sehr stabil, etwa die Temperaturabhängigkeit des Lichtempfängers gegenüber einer herkömmlichen Lawinenphotodiode um einen Faktor drei geringer. Dabei ist über einen großen Temperaturarbeitsbereich kein Abgleich erforderlich.

Die Lawinenphotodiodenelemente weisen bevorzugt eine Durchbruchspannung von höchstens 70V, insbesondere von höchstens 50V, 30V oder 15V auf. Die Hochspannungsversorgung bei herkömmlich genutzten Lawinenphotodioden kann damit entfallen, und es werden erheblich geringere Herstellkosten möglich. Entsprechend der geringeren Durchbruchspannung genügt auch für die Modulation eine Variation um einige Volt anstelle einer Größenordnung von hundert Volt. Beispielsweise sind bereits mit etwa 1-3 V Ein- und Ausschaltvorgänge realisierbar. Vorzugsweise sollte die Modulation nicht unter die Durchbruchspannung führen oder sogar stets einen gewissen Abstand von etwa einem Volt zur Durchbruchspannung lassen. Unterhalb der Durchbruchspannung wird der Geiger-Modus gänzlich verlassen, und in einem Bereich direkt oberhalb der Durchbruchspannung zeigt der Lichtempfänger mitunter wegen statistischer Effekte bei der Auslösungswahrscheinlichkeit einer Lawine noch kein ausreichend lineares Verhalten.

Die Lawinenphotodiodenelemente sind vorzugsweise in einem CMOS-Prozess hergestellt, insbesondere als Matrixstruktur auf einem gemeinsamen Substrat. Der Lichtempfänger wird somit kostengünstig verfügbar. Ein CMOS-Bauteil ermöglicht auch eine im Vergleich zu einer herkömmlichen Lawinenphotodiode deutlich herabgesetzte Durchbruchspannung.

Vorzugsweise ist ein Frequenzgenerator vorgesehen, um als erstes Signal eine Sinusmodulation mit einer ersten Frequenz und als zweites Signal eine Sinusmodulation mit einer zweiten Frequenz ungleich der ersten Frequenz zu erzeugen. Nach dem Mischprozess in dem Lichtempfänger erhält man bei diesem Zwei-Frequenzen-Verfahren ein Auswertungssignal mit der Zwischenfrequenz, welches in seiner Phase weiterhin die Information über den optischen Laufweg zu dem Objekt und zurück enthält. Somit kann die nachgelagerte Auswertung mit einem je nach Wahl der beiden Ausgangsfrequenzen wesentlich niederfrequenteren Signal arbeiten und kommt dafür mit deutlich weniger anspruchsvoller Elektronik aus. Es ist denkbar, eine dritte Frequenz hinzuzunehmen, um den Eindeutigkeitsbereich der Phasenmessung zu erhöhen. Wenn die dadurch erzeugte Zwischenfrequenz nahe bei der Zwischenfrequenz des anderen Frequenzpaars liegt, kann eine Nachbearbeitung des Auswertungssignals die gleiche bleiben.

Die erste Frequenz und die zweite Frequenz sind vorzugsweise zueinander synchron aus einer gemeinsamen Taktquelle abgeleitet. Dadurch werden Stabilitäts- und Bezugsprobleme zwischen erstem und zweitem Signal vermieden. Die Frequenzen können beispielsweise in einem FPGA durch Teilen aus einem Grundtakt mit Hilfe von PLL-Strukturen generiert werden.

Dem Lichtempfänger ist bevorzugt ein Filterelement nachgeordnet, insbesondere ein Tiefpass oder ein Gleichrichter mit Tiefpass, um das Auswertungssignal als Zwischenfrequenzsignal mit unterdrückten Anteilen des ersten und des zweiten Signals zu erhalten. Für die Auswertung sind die beiden Ausgangsfrequenzen des ersten Signals und des zweiten Signals nicht mehr interessant. Sie können mit einfachen Bauteilen in dem Auswertungssignal unterdrückt werden.

Vorzugsweise ist ein Frequenzgenerator vorgesehen, um das erstes Signal und das zweite Signal als Sinusmodulation einer gleichen Frequenz mit verschiedenen Phasenverschiebungen zueinander zu erzeugen. Alternativ zu einer Mischung zweier Frequenzen werden hier gleiche Frequenzen mit unterschiedlichen Phasen gemischt. Die Auswertungseinheit ist bevorzugt dafür ausgebildet, das Auswertungssignal zu mitteln und aus den Mittelwerten mehrerer Messungen bei verschiedenen Phasenverschiebungen die Lichtlaufzeit zu rekonstruieren. Die Mittelung kann durch einen Tiefpass erfolgen. Der Mittelwert ist auch schon bei einer einzigen ursprünglichen Phasenverschiebung ein Maß für die Phasenlage des Empfangssignals. Allerdings fehlt eine Normierung, um dieses Maß zu bewerten. Deshalb werden mehrere Messpunkte bestimmt. Beispielsweise werden Mittelwerte bei einer ursprünglichen Phasenverschiebung von 0°, 90° und 180° gemessen, um das Schwingungsverhalten der Mittelwerte in Abhängigkeit von einer ursprünglichen Phasenverschiebung für beliebige Phasen zu rekonstruieren. Eine Messung bei 0° und 90° genügt prinzipiell, aber dann verbleibt eine Pegelabhängigkeit, die durch die zusätzliche Messung bei 180° aufgelöst wird. Drei Phasen genügen, um eine eindeutige Messung zu gewährleisten. Mit weiteren Messungen, etwa bei 270°, ist die Rekonstruktion überbestimmt, und diese Zusatzinformation kann durch übliche Auswertungsverfahren zu einer noch genaueren Messung verwendet werden. Die Zahlenwerte 0°, 90°, 180°, 270° für die ursprünglichen Phasenverschiebungen sind besonders vorteilhaft einstellbar, aber nur Beispiele, die auch verändert werden können. Durch die mehreren Messungen wird also der Bezug gegeben, um die Phasenverschiebung durch den Lichtpfad zum Objekt zu bewerten. Der Empfangspfad in einem Sensor mit einem derartigen Mehr-Phasen-Messverfahren, im Falle der konkreten Phasenverschiebungen 0°, 90°, 180° und 270° eine Vier-Phasen-Messverfahren, benötigt außer dem Lichtempfänger lediglich noch einen Mikrocontroller mit einem internen A/D-Wandler für das Auswertungssignal und einem Frequenzgenerator für den Mischprozess. Auf herkömmlich eingesetzte Elemente wie Verstärker, Mischer, Filter oder Frequenzgeneratoren kann verzichtet werden, so dass ein äußerst kostengünstiges System entsteht.

Der Lichtsender ist bevorzugt für einen Burstmodus ausgebildet, in dem Sendepausen in dem Aussenden des modulierten Sendelichts vorgesehen sind und jeweils am Ende einer Sendepause ein definierter synchroner Beginn des ersten Signals und des zweiten Signals vorgesehen ist. Durch solche Bursts wird die Verlustleistung trotz der häufigen vollständigen Lawinendurchbrüche begrenzt. Außerdem kann durch den Beginn des Bursts der Zeitbezug festgelegt werden, indem jeder Burst mit definierten Phasen des ersten Signals und des zweiten Signals begonnen wird.

Vorzugsweise ist ein Codemustergenerator vorgesehen, in welchem das erste Signal als Codemuster und das zweite Signal als dasselbe Codemuster mit unterschiedlichen Phasenverschiebungen zu dem ersten Signal erzeugbar ist, wobei die Auswertungseinheit dafür ausgebildet ist, bei mehreren Phasenverschiebungen aus einem jeweiligen Mittelwert des Auswertungssignals eine Korrelationsfunktion zu erzeugen und aus deren Korrelationsmaximum die Lichtlaufzeit zu bestimmen. In einem solchen codierten Verfahren demoduliert der Lichtempfänger die Codefolge und arbeitet als Korrelator. Die Lichtlaufzeit zu dem Objekt entspricht derjenigen Phasenverschiebung zwischen erstem und zweitem Signal, bei der die größte Übereinstimmung, also das stärkste gemittelte Ausgangssignal entsteht. Umgebungslicht enthält keine Codefolgen und erzeugt deshalb praktisch keine Korrelation, so dass die Codierung die Robustheit gegenüber Fremdlicht erhöht. Codierten Fremdlichtquellen kann aufgrund der großen Vielfalt möglicher Codefolgen, unter denen auch Auswahl an geeigneten Codefolgen besteht, relativ leicht ausgewichen werden.

Die Auswertungseinheit ist vorzugsweise dafür ausgebildet, das Korrelationsmaximum durch Interpolation zu rekonstruieren. Das Raster der nacheinander ausgemessenen Mittelwerte bei unterschiedlichen Phasenverschiebungen zwischen erstem und zweitem Signal zur Bestimmung der Korrelationsfunktion kann deshalb grober bleiben als die Messgenauigkeit.

Die Lawinenphotodioden sind bevorzugt in mehrere Gruppen unterteilt, wobei die Empfangsempfindlichkeits-Modulationseinheit dafür ausgebildet ist, die Gruppen mit unterschiedlichen zweiten Signalen anzusteuern, insbesondere mit unterschiedlichen Phasenlagen der zweiten Signale. Der Lichtempfänger wird damit unterteilt, um das Empfangssignal parallel mit mehreren zweiten Signalen zu mischen. Damit können Messungen mit unterschiedlichen Phasenverschiebungen zwischen erstem Signal und zweitem Signal wesentlich rascher aufeinander folgen, um die Ansprechzeit oder Messrate des Sensors zu verbessern. Beispielsweise werden bei einem Vier-Phasen-Messverfahren vier Gruppen gebildet, so dass die Messungen bei 0°, 90°, 180° und 270° gleichzeitig vorgenommen werden. Bei einem codierten Verfahren können ebenfalls mehrere oder sogar alle Punkte der Korrelationsfunktion zeitgleich statt sequentiell bestimmt werden.

Der Lichtempfänger ist bevorzugt dafür ausgebildet, die Position eines erfassten Lichtflecks daran zu erkennen, welches Lawinenphotodiodenelement ein Signal erzeugt, wobei die Auswertungseinheit dafür ausgebildet ist, die Entfernung mittels Triangulation aus der Position des Lichtflecks zu bestimmen. Hier erfolgt also eine Triangulation zusätzlich zu einer Entfernungsbestimmung aus der Lichtlaufzeit. Dies kann in allen Entfernungen genutzt werden, um eine zusätzliche Messquelle zur Überprüfung und Steigerung der Genauigkeit zu gewinnen. Alternativ wird der Messbereich zwischen den Verfahren aufgeteilt, beispielsweise im Nahbereich Triangulation und im Fernbereich ein Lichtlaufzeitverfahren verwendet.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: ein beispielhaftes vereinfachtes Ersatzschaltbild einer Lawinenphotodiode im Geiger-Modus;
- Fig. 2: eine Kennlinie des Ausgangssignals einer Vielzahl von Lawinenphotodiodenelementen gegenüber der angelegten Spannung oberhalb der Durchbruchspannung;
- Fig. 3: ein Blockschaltbild einer Ausführungsform eines Messkerns eines optoelektronischen entfernungsmessenden Sensors für ein Zwei-Frequenzen-Verfahren;
- Fig. 4: ein Blockschaltbild einer weiteren Ausführungsform eines Messkerns für ein Vier-Phasen-Verfahren;
- Fig. 5: eine beispielhafte Darstellung des in dem Messkern gemäß Figur 4 rekonstruierten Schwingungsverhaltens des Mittelwerts des Auswertungssignals;
- Fig. 6: ein Blockschaltbild einer weiteren Ausführungsform eines Messkerns für ein codiertes Verfahren; und
- Fig. 7: eine beispielhafte Darstellung einer durch Interpolation rekonstruierten Korrelationsfunktion in dem Messkern gemäß Figur 6.

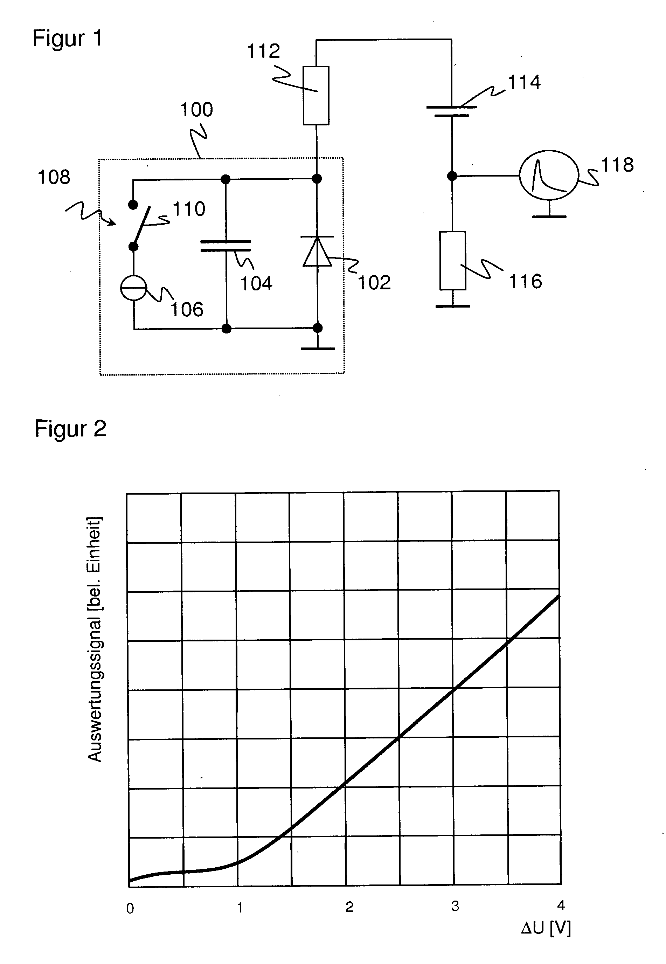

Figur 1 zeigt ein beispielhaftes vereinfachtes Ersatzschaltbild einer Lawinenphotodiode 100 im Geiger-Modus. In der Praxis handelt es sich um ein Halbleiterbauteil, dessen nicht dargestellter Aufbau hier als bekannt vorausgesetzt wird. Die Lawinenphotodiode 100 zeigt zum einen das Verhalten einer Diode 102. Sie hat eine Kapazität, die durch einen parallel geschalteten Kondensator 104 repräsentiert wird. Der mögliche Lawinendurchbruch erzeugt Ladungsträger, deren Ursprung in dem Ersatzschaltbild als Stromquelle 106 dargestellt wird. Der Lawinendurchbruch wird durch ein auftreffendes Photon 108 ausgelöst, wobei dieser Vorgang wie ein Schalter 110 wirkt. Nach außen ist die Lawinenphotodiode über einen Widerstand 112 mit einer Stromquelle 114 verbunden. Zwischen dieser Stromquelle und einem weiteren Widerstand 116 kann an einem Punkt 118 das Ausgangssignal betrachtet werden.

Im Bereitschaftszustand liegt über der Diode 102 eine Spannung oberhalb der Durchbruchspannung an. Erzeugt dann ein einfallendes Photon 108 ein Ladungsträgerpaar, so schließt dies gleichsam den Schalter 110, so dass die Lawinenphotodiode über die Stromquelle 106 mit Ladungsträgern geflutet wird. Neue Ladungsträger entstehen aber nur, solange das elektrische Feld stark genug bleibt. Wird durch die Stromquelle 106 der Kondensator 104 so weit entladen, dass die Durchbruchspannung unterschritten ist, so kommt die Lawine von selbst zum Erliegen ("passive quenching"). Danach wird der Kondensator 104 von der äußeren Stromquelle 114 über den Widerstand 112 wieder aufgeladen, bis wieder eine Spannung über der Durchbruchspannung an der Diode 102 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal am Punkt 118 rapide und unabhängig von der Intensität des auslösenden Lichts, hier eines Photons 108, auf einen Maximalwert an und fällt dann nach dem Löschen der Lawine wieder ab. Die Pulsform ist am Punkt 118 angedeutet. Die Zeitkonstante des Abfalls, welche eine Totzeit der Lawinenphotodiode 100 angibt, bestimmt sich aus der Kapazität des Kondensators 104 und dem Widerstand 112 und liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor liegt typischerweise in einer Größenordnung von 10^5 bis 10^7 und ergibt sich im Wesentlichen aus der maximalen Anzahl von Ladungsträgern, die von der Lawine in der Lawinenphotodiode 100 rekrutiert werden können.

Fällt das zu messende Ereignis in die Totzeit, so ist die Lawinenphotodiode 100 weitgehend blind. Die Lawinenphotodiode 100 reagiert auch auf jedes Einzelereignis mit dem gleichen Signal, das Abwarten einer ausreichenden Totzeit und Auslösen eines Ladungsträgerpaares vorausgesetzt. Allein ist eine Lawinenphotodiode 100 deshalb weitgehend ungeeignet, um eine Empfangsintensität zu bewerten. Außerdem kann ein einzelnes Photon des Umgebungslichts oder ein einziges Ladungsträgerpaar aufgrund von Dunkelrauschen genügen, um eine Lawine auszulösen, die nichts mit dem zu messenden Ereignis zu tun hat.

Deshalb wird in der Praxis keine einzelne Lawinenphotodiode 100 verwendet, sondern es werden eine Vielzahl von einzelnen Lawinenphotodiodenelementen zu einer Matrix verbunden. Ein entsprechendes Bauelement kann beispielsweise in einem CMOS-Prozess hergestellt werden. Die Durchbruchspannung der Lawinenphotodiodenelemente ist deutlich geringer als bei herkömmlichen Lawinenphotodioden und beträgt beispielsweise höchstens 70V oder sogar nur 15V-30V.

Eine Lawinenphotodiode im Geiger-Modus wird anders als eine herkömmliche Lawinenphotodiode oberhalb des linearen Bereichs betrieben. Es zeigt sich aber, dass durch das Zusammenschalten einer Vielzahl von Lawinenphotodiodenelementen über deren Summensignal doch wieder ein lineares Verhalten erreicht werden kann.

Figur 2 zeigt dazu eine Kennlinie einer Matrix von Lawinenphotodiodenelementen. Dabei ist auf der X-Achse eine Spannung ΔU aufgetragen, um welche die Lawinenphotodiodenelemente über eine Durchbruchspannung hinaus vorgespannt werden. Die Y-Achse bezeichnet das gemeinsame Ausgangssignal. Dies entspricht der Summe über eine Vielzahl von Signalen, wie sie in Figur 1 beispielhaft am Punkt 118 abgegriffen werden können. Die Matrix von Lawinenphotodiodenelementen wird mit einem konstanten Gleichlicht angestrahlt, während ΔU variiert und das Ausgangssignal bestimmt wird.

Es zeigt sich, dass die Abhängigkeit weitgehend linear ist. Die Linearität ist für kleine ΔU, also nahe der Durchbruchspannung, noch eingeschränkt. Das liegt daran, dass hier noch ein statistischer Effekt beiträgt, weil die Feldstärke nicht ausreicht, damit praktisch jedes erzeugte Ladungsträgerpaar auch tatsächlich eine Lawine auslöst. Ab einem ΔU von etwa einem Volt wird ein Linearitätsbereich erreicht.

Eine Folgerung aus der Linearität der Kennlinie ist, dass eine Matrix von Lawinenphotodiodenelementen durch Veränderung von ΔU linear in ihrem Verstärkungsverhalten angepasst und somit ΔU genutzt werden kann, um das Empfangssignal in einfacher und vorhersagbarer Weise zu modulieren. Diese empfangsseitige Modulation wird in den im Folgenden zu beschreibenden Ausführungsformen eines entfernungsmessenden Sensors genutzt, um einen Mischprozess mit moduliertem Licht direkt im Lichtempfänger auszuführen. Dabei wird der hohe Verstärkungsfaktor des Geiger-Modus' ausgenutzt, um auf weitere analoge Schaltelemente, etwa Transimpedanzverstärker oder Filter, zumindest weitgehend zu verzichten.

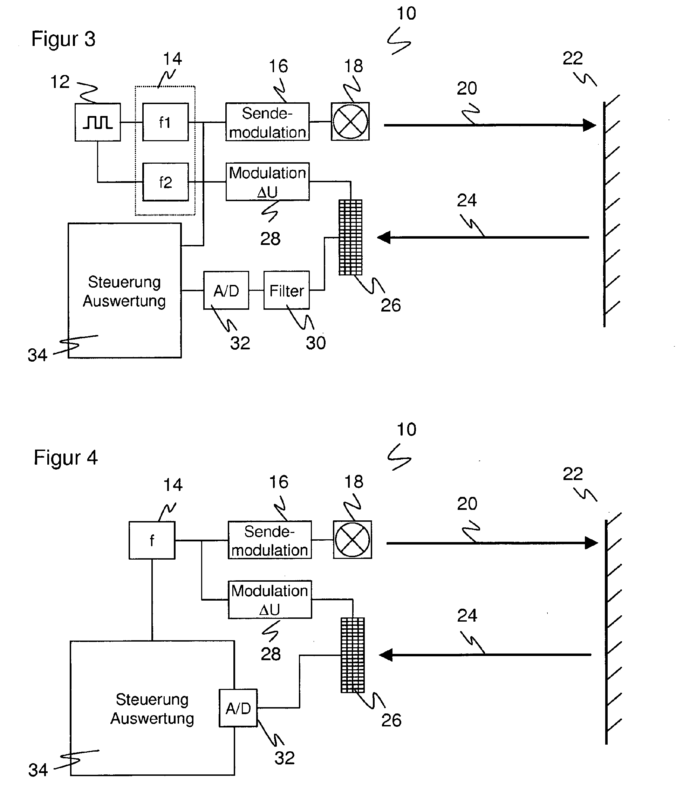

Figur 3 zeigt ein Blockschaltbild eines Messkerns eines entfernungsmessenden optoelektronischen Sensors 10 für ein Zwei-Frequenzen-Verfahren. Eine Taktquelle 12 stellt einen Grundtakt bereit, aus dem ein Frequenzgenerator 14 eine erste Sinusmodulation einer ersten Frequenz f1 und eine zweite Sinusmodulation einer zweiten Frequenz f2 ableitet. Die erste Sinusmodulation wird von einer Sendelicht-Modulationseinheit 16, welche einen Lichtsender 18 ansteuert, dafür genutzt, das Sendelicht 20 entsprechend in seiner Amplitude zu modulieren. Der Lichtsender 18 kann eine LED- oder Laserlichtquelle aufweisen. Das Sendelicht 20 wird in einem Überwachungsbereich 22 remittiert, sofern dort ein Objekt vorhanden ist, und kehrt als weiterhin amplitudenmoduliertes Empfangslicht 24 zu dem Sensor 10 zurück.

In einem Empfangspfad des Sensors 10 ist ein Lichtempfänger 26 vorgesehen, der eine Matrix von im Geiger-Modus betriebenen Lawinenphotodiodenelementen umfasst, wie sie oben im Zusammenhang mit den Figuren 1 und 2 beispielhaft erläutert wurden. Die Lawinenphotodiodenelemente sind somit oberhalb der Durchbruchspannung vorgespannt. Die zweite Sinusmodulation aus dem Frequenzgenerator 14 wird einer Modulationseinheit 28 zugeführt, welche die Vorspannung des Lichtempfängers der zweiten Sinusmodulation folgend um ein ΔU moduliert. Während der Lichtempfänger 26 das mit der ersten Sinusmodulation in seiner Amplitude variierende Empfangslicht registriert, verändert sich demnach seine Empfangsempfindlichkeit oder seine Gesamtverstärkung gemäß ΔU mit der zweiten Sinusmodulation. Somit findet ein Mischprozess statt, und das Ausgangs- oder Auswertungssignal des Lichtempfängers 26, nämlich das Summensignal von dessen Lawinenphotodiodenelementen, enthält ein Zwischenfrequenzsignal, welches weiterhin die der Lichtlaufzeit entsprechende Phasenverschiebung aufweist, die auf dem Hin- und Rückweg zwischen Sensor 10 und Objekt im Überwachungsbereich 22 entstanden ist.

Die höheren Frequenzen f1 und f2 der erzeugenden Sinusmodulationen werden für die Auswertung nicht mehr gebraucht, so dass dem Lichtempfänger optional ein Filterelement 30 nachgeschaltet werden kann, etwa ein Tiefpass oder zusätzlich ein Gleichrichter, um die Zwischenfrequenz noch besser auswerten zu können. Das Auswertungssignal wird dann in einem A/D-Wandler 32 digitalisiert und einer Auswertungseinheit 34 zugeführt, die zugleich für Steuerungsaufgaben des Messkerns zuständig sein kann.

Die Auswertungseinheit 34 kennt eine Referenzphasenlage durch Verbindung mit dem Frequenzgenerator 14, oder alternativ von einem nicht dargestellten elektrischen oder optischen Referenzpfad. Aus der Referenzphasenlage kann die Auswertungseinheit 34 die Lichtlaufzeit und damit die Entfernung zu einem Objekt aus der Phasenlage des Auswertungssignals in der Zwischenfrequenz bestimmen. Eine echte Referenzmessung auf einem Referenzpfad ist denkbar, aber nicht zwingend erforderlich. Denn die Driften beispielsweise bei Temperaturveränderungen, die üblicherweise mit einer solchen Referenzmessung ausgeglichen werden, sind in dem Lawinenphotodiodenelementen im Geiger-Modus basierenden Lichtempfänger 26 wegen dessen größerer Stabilität deutlich verringert und müssen daher nicht unbedingt kompensiert werden.

Die Auswertungseinheit 34 kann auf einem digitalen Logikbaustein implementiert sein, wie einem Mikroprozessor oder einem FPGA. Letzteres hat den Vorteil, dass auch weitere Elemente wie der Frequenzgenerator 14 oder der A/D-Wandler 32 auf demselben Baustein untergebracht werden können wie die Auswertungseinheit 34.

In einer Ausführungsform arbeitet der Messkern in einem Burstmodus. Dabei wird das Sendelicht 20 nicht ständig ausgesandt, sondern nur über einen bestimmten Bruchteil oder eine bestimmte Anzahl von Perioden der Zwischenfrequenz. Ein solcher Burst beginnt vorzugsweise zu definierten Phasen der ersten Sinusmodulation und der zweiten Sinusmodulation, beispielsweise so, dass sich für ein fiktives Objekt der Entfernung Null gleich zu Beginn des Bursts ein Nulldurchgang der Zwischenfrequenz ergibt. Dadurch wird dann auch ein Zeitbezug für das Auswertungssignal in der Zwischenfrequenz vorgegeben. Zudem begrenzt der Burstmodus die Leistungsverluste.

Figur 4 zeigt ein Blockschaltbild einer weiteren Ausführungsform eines Messkerns eines entfernungsmessenden optoelektronischen Sensors 10 für ein Vier-Phasen-Verfahren. Wie in der gesamten Beschreibung bezeichnen gleiche Bezugszeichen die gleichen oder einander entsprechenden Merkmale. Im Unterschied zu der Ausführungsform gemäß Figur 3 wird hier die gleiche Sinusmodulation der gemeinsamen Frequenz f sowohl für die Amplitudenmodulation des Sendelichts 20 als auch für die Modulation von ΔU verwendet. Aus dem Auswertungssignal nach dem Mischprozess in dem Lichtempfänger 26 wird bei diesem Verfahren nicht direkt eine Phase bestimmt, sondern es wird zunächst einfach ein Mittelwert bestimmt.

Dieser Mittelwert ist für den durch die Lichtlaufzeit in dem Überwachungsbereich 22 entstandenen Phasenunterschied charakteristisch. Das kann man sich für einige besondere Phasenunterschiede überlegen: Bei einer Phase von 0° liegen beide Eingangssignale des Mischprozesses genau übereinander und ergeben einen maximalen Mittelwert. Mit einer Phase von 90° entsteht eine mittelwertfreie Schwingung der Frequenz 2f. Bei 180° sind die Eingangssignale gerade gegenphasig mit einem negativen, minimalen Mittelwert, während bei 270° erneut eine mittelwertfreie Schwingung der Frequenz 2f entsteht, mit einem hier belanglosen Phasenunterschied zum Auswertungssignal bei 90°.

Der Mittelwert ist also ein Maß für den gesuchten Phasenunterschied in der Amplitudenmodulation des Empfangslichts aufgrund der Laufzeit in dem Überwachungsbereich 22. Allerdings fehlt eine Normierung, um den Mittelwert korrekt bewerten zu können.

Deshalb ist die Modulationseinheit 28 in der Lage, eine zusätzliche Phasenverschiebung in die Modulation von ΔU einzuführen. Die Messung wird nicht nur einmal durchgeführt, sondern mindestens dreimal und bevorzugt viermal, beispielsweise bei einer zusätzlichen Phasenverschiebung von 0°, 90°, 180° und 270°.

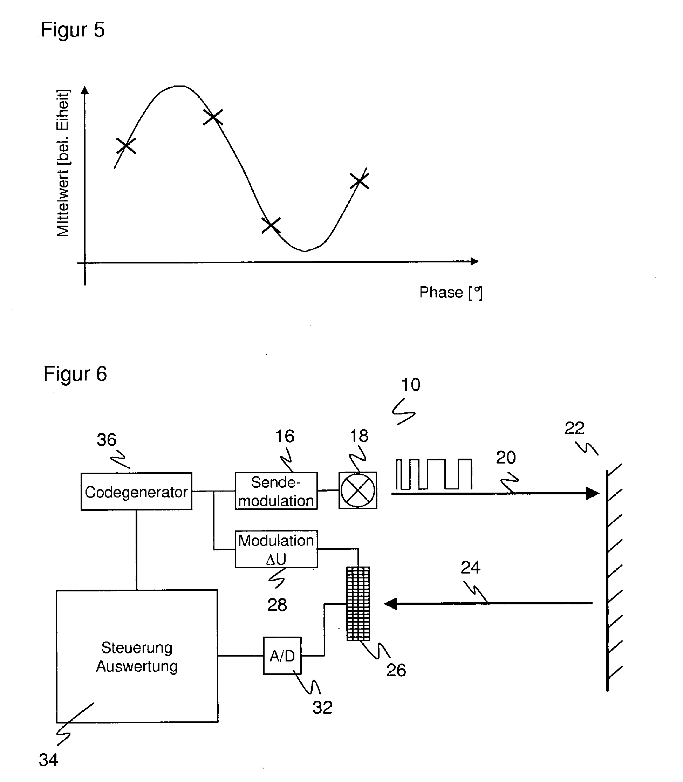

Wie Figur 5 rein beispielhaft illustriert, lässt sich aus diesen vier als Kreuzen gezeigten Messpunkten das gesamte Schwingungsverhalten des Mittelwerts in Abhängigkeit von einem Phasenunterschied rekonstruieren. Bei einer fiktiven Lichtlaufzeit von Null müsste die rekonstruierte Schwingungskurve gerade die Punkte 0°, 90°, 180° und 270° eines Sinus treffen. Die Phasenabweichung davon lässt sich entsprechend aus den Messpunkten und der rekonstruierten Schwingungskurve als der gesuchte Wert für die Lichtlaufzeit ablesen.

Die Ausführungsform gemäß Figur 4 stellt keine besonderen Anforderungen an den Frequenzgenerator 14. Es müssen anders als im Beispiel der Figur 3 keine zwei zueinander stabilen Frequenzen ausgekoppelt werden. Eine einfache Frequenz wird möglicherweise schon von einem Mikrocontroller bereitgestellt, ebenso wie ein integrierter A/D-Wandler eines Mikrocontrollers genutzt werden kann. Somit kommt diese Ausführungsform praktisch schon mit einem Lichtsender 14, Lichtempfänger mit Lawinenphotodiodenelementen und einem Mikrocontroller als Messkern aus und ist daher äußerst kostengünstig.

Zur Begrenzung der Leistungsaufnahme kann auch in dieser Ausführungsform der im Zusammenhang mit Figur 3 erläuterte Burstmodus verwendet werden. In einer Weiterbildung des Messkerns ist weiterhin nicht erforderlich, die vierfache Messung nacheinander auszuführen. Stattdessen werden unter den Lawinenphotodiodenelementen vier Gruppen gebildet, die mit einem ΔU mit den unterschiedlichen Phasen 0°, 90°, 180° und 270° moduliert werden und somit die vier erforderlichen Messpunkte parallel erfassen.

Figur 6 zeigt ein Blockschaltbild einer weiteren Ausführungsform eines Messkerns eines entfernungsmessenden optoelektronischen Sensors 10 für ein codiertes Verfahren. Anstelle einer Sinusmodulation wird hier von einem Codegenerator 36 ein binärer Code erzeugt, dessen Amplitude gemäß dem Code zwischen einem Minimalwert und einem Maximalwert wechselt. Dieser Code wird dem Sendelicht 20 durch die Sendelicht-Modulationseinheit 16 aufgeprägt. Der gleiche Code wird auch von der Modulationseinheit 28 genutzt, um ΔU zu modulieren. In mehreren aufeinanderfolgenden Messungen wird der Code dabei durch Wahl einer zusätzlichen Phase auf einem zeitlichen Raster im Bereich der zu erfassenden Entfernungen verschoben. Bei jeder Messung wird der Mittelwert des Auswertungssignals gebildet. Dieser Mittelwert ist hoch, wenn die Codes des Empfangslichts und der Modulation von ΔU gerade in Phase sind, und verschwindet ansonsten praktisch vollständig, sofern die Codes geeignet gewählt sind. Durch die aufeinanderfolgenden Messungen und Bestimmungen des Mittelwerts des gemischten Signals mit unterschiedlichem Zeitversatz wird somit eine Korrelationsfunktion gebildet, wobei die zeitliche Lage des Korrelationsmaximums der gesuchten Laufzeit entspricht.

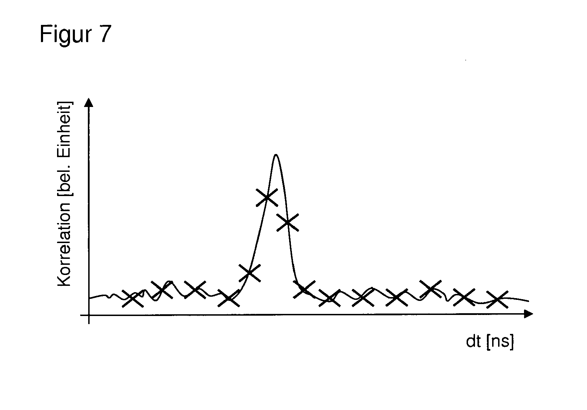

Figur 7 zeigt rein beispielhaft eine solche Korrelation. Die Messpunkte sind durch Kreuze dargestellt. Nimmt man den größten Messwert als Korrelationsmaximum, so wird das tatsächliche Korrelationsmaximum nur mit der zeitlichen Präzision erfasst, welche dem Phasenabstand der Messungen entspricht. Um die Genauigkeit zu erhöhen, kann das Korrelationsmaximum durch Funktionsfit oder ähnliche Interpolationsverfahren rekonstruiert werden. Da dennoch eine größere Anzahl von Messungen erforderlich ist, um die Lage des Korrelationsmaximums zu schätzen, können ähnlich wie bei der Ausführungsform gemäß Figur 4 Gruppen von Lawinenphotodiodenelementen gebildet werden, deren ΔU jeweils mit dem Code in einer anderen Phase moduliert wird, so dass im Endeffekt mehrere oder sogar alle Messungen parallel ausgeführt werden

Der Lichtempfänger 26 kann so ausgebildet werden, dass er erkennt, welche seiner Lawinenphotodiodenelementen ein Photon registriert haben, und wird so zu einem ortsaufgelösten Lichtempfänger. Damit sind Mischformen mit einem anderen Messprinzip zu Entfernungsmessung denkbar, nämlich der Triangulation. Diese stößt häufig an ihre Grenzen, weil sehr baukleine Sensoren bei größeren Distanzen keinen Platz mehr für die erforderliche Triangulationsbasis bieten. In einer Weiterbildung der Erfindung kann man die Triangulation mit einem Lichtlaufzeitverfahren kombinieren. Die Empfängerzeile eines Triangulationstasters wird dazu durch ein längliches Lawinenphotodiodenarray ersetzt. Im Nahbereich wird die Lage des Lichtflecks in einem Triangulationsverfahren ausgewertet, im Fernbereich dagegen die Lichtlaufzeit mit einem der oben beschriebenen Verfahren. Alternativ werden stets beide Verfahren durchgeführt und miteinander verglichen oder verrechnet, um eine höhere Messgenauigkeit zu erzielen.

## Patentansprüche

1. Optoelektronischer Sensor (10) zur Entfernungsmessung von Objekten in einem Überwachungsbereich (22) nach einem Lichtlaufzeitverfahren, wobei der Sensor (10) einen Lichtsender (18) mit einer Sendelicht-Modulationseinheit (16) zum Aussenden von mit einem ersten Signal moduliertem Sendelicht (209), einen Lichtempfänger (26) mit einer Empfangsempfindlichkeits-Modulationseinheit (28) zum Empfangen von Licht (24) aus dem Überwachungsbereich (22) mit einer mit einem zweiten Signal modulierten Empfangsempfindlichkeit, so dass der Lichtempfänger (26) als Mischer fungiert und ein aus dem ersten und dem zweiten Signal gemischtes Auswertungssignal ausgibt, und eine Auswertungseinheit (34) zum Bestimmen der Lichtlaufzeit aus dem Auswertungssignal aufweist,
**dadurch gekennzeichnet,**
**dass** der Lichtempfänger (26) eine Vielzahl von Lawinenphotodiodenelementen aufweist, die jeweils mit einer Vorspannung oberhalb einer Durchbruchspannung vorgespannt und somit in einem Geiger-Modus betrieben sind, dass das zweite Signal die Empfangsempfindlichkeit durch Modulation der Vorspannung in einem Linearitätsbereich oberhalb der Durchbruchspannung moduliert, und dass das Auswertungssignal ein gemeinsames Signal der Lawinenphotodiodenelemente ist.

2. Sensor (10) nach Anspruch 1,
wobei die Lawinenphotodiodenelemente eine Durchbruchspannung von höchstens 70V, insbesondere von höchstens 50V, 30V oder 15V aufweisen.

3. Sensor (10) nach Anspruch 1 oder 2,
wobei die Lawinenphotodiodenelemente in einem CMOS-Prozess hergestellt sind, insbesondere als Matrixstruktur auf einem gemeinsamen Substrat.

4. Sensor (10) nach einem der vorhergehenden Ansprüche,
wobei ein Frequenzgenerator (14) vorgesehen ist, um als erstes Signal eine Sinusmodulation mit einer ersten Frequenz (f1) und als zweites Signal eine Sinusmodulation mit einer zweiten Frequenz (f2) ungleich der ersten Frequenz (f1) zu erzeugen, wobei insbesondere die erste Frequenz (f1) und die zweite Frequenz (f2) zueinander synchron aus einer gemeinsamen Taktquelle (12) abgeleitet sind.

5. Sensor (10) nach Anspruch 4,
wobei dem Lichtempfänger (26) ein Filterelement (30) nachgeordnet ist, insbesondere ein Tiefpass oder ein Gleichrichter, um das Auswertungssignal als Zwischenfrequenzsignal mit unterdrückten Anteilen des ersten und des zweiten Signals zu erhalten.

6. Sensor (10) nach einem der Ansprüche 1 bis 3,
wobei ein Frequenzgenerator (14) vorgesehen ist, um das erstes Signal und das zweite Signal als Sinusmodulation einer gleichen Frequenz (f) mit verschiedenen Phasenverschiebungen zueinander zu erzeugen, und wobei die Auswertungseinheit (34) dafür ausgebildet ist, das Auswertungssignal zu mitteln und aus den Mittelwerten mehrerer Messungen bei verschiedenen Phasenverschiebungen die Lichtlaufzeit zu rekonstruieren.

7. Sensor (10) nach einem der Ansprüche 4 bis 6,
wobei der Lichtsender (18) für einen Burstmodus ausgebildet ist, in dem Sendepausen in dem Aussenden des modulierten Sendelichts vorgesehen sind und jeweils am Ende einer Sendepause ein definierter synchroner Beginn des ersten Signals und des zweiten Signals vorgesehen ist.

8. Sensor (10) nach einem der Ansprüche 1 bis 3,
wobei ein Codemustergenerator (36) vorgesehen ist, in welchem das erste Signal als Codemuster und das zweite Signal als dasselbe Codemuster mit unterschiedlichen Phasenverschiebungen zu dem ersten Signal erzeugbar ist, und wobei die Auswertungseinheit (34) dafür ausgebildet ist, bei mehreren Phasenverschiebungen aus einem jeweiligen Mittelwert des Auswertungssignals eine Korrelationsfunktion zu erzeugen und aus deren Korrelationsmaximum die Lichtlaufzeit zu bestimmen, wobei insbesondere das Korrelationsmaximum durch Interpolation rekonstruiert wird.

9. Sensor (10) nach einem der vorhergehenden Ansprüche,
wobei die Lawinenphotodioden in mehrere Gruppen unterteilt sind, und wobei die Empfangsempfindlichkeits-Modulationseinheit (28) dafür ausgebildet ist, die Gruppen mit unterschiedlichen zweiten Signalen anzusteuern, insbesondere mit unterschiedlichen Phasenlagen der zweiten Signale.

10. Sensor (10) nach einem der vorhergehenden Ansprüche,
wobei der Lichtempfänger (26) dafür ausgebildet ist, die Position eines erfassten Lichtflecks daran zu erkennen, welches Lawinenphotodiodenelement ein Signal erzeugt, und wobei die Auswertungseinheit (34) dafür ausgebildet ist, die Entfernung mittels Triangulation aus der Position des Lichtflecks zu bestimmen.

11. Verfahren zur Entfernungsmessung von Objekten in einem Überwachungsbereich (22) nach einem Lichtlaufzeitverfahren, bei dem mit einem ersten Signal moduliertes Sendelicht (20) ausgesandt und an dem Objekt remittiertes Licht (24) in einem Lichtempfänger (26) empfangen wird, dessen Empfangsempfindlichkeit mit einem zweiten Signal moduliert wird, so dass der Lichtempfänger (26) als Mischer fungiert und ein aus dem ersten und dem zweiten Signal gemischtes Auswertungssignal ausgibt, und wobei aus dem Auswertungssignal die Lichtlaufzeit bestimmt wird,
**dadurch gekennzeichnet,**
**dass** das remittierte Licht (24) in einer Vielzahl von Lawinenphotodiodenelementen des Lichtempfängers (26) registriert wird, die jeweils mit einer Vorspannung oberhalb einer Durchbruchspannung vorgespannt und somit in einem Geiger-Modus betrieben werden, dass die Empfangsempfindlichkeit mittels Modulation der Vorspannung mit dem zweiten Signal in einem Linearitätsbereich oberhalb der Durchbruchspannung moduliert wird, und dass die Ausgangssignale der Lawinenphotodiodenelemente gemeinsam das Auswertungssignal erzeugen.

12. Verfahren nach Anspruch 11,
wobei die Durchbruchspannung höchstens 70V, insbesondere höchstens 50V, 30V oder 15V beträgt.

13. Verfahren nach Anspruch 11 oder 12,
wobei das erstes Signal als eine Sinusmodulation mit einer ersten Frequenz (f1) und das zweite Signal als eine Sinusmodulation mit einer zweiten Frequenz (f2) ungleich der ersten Frequenz (f1) erzeugt werden, so dass als Auswertungssignal durch den Mischprozess in dem Lichtempfänger (26) ein Zwischenfrequenzsignal entsteht.

14. Verfahren nach Anspruch 11 oder 12,
wobei das erstes Signal und das zweite Signal als Sinusmodulation einer gleichen Frequenz (f) mit verschiedenen Phasenverschiebungen zueinander erzeugt werden, wobei das Auswertungssignal bei jeweils einer Phasenverschiebung gemittelt und aus den Mittelwerten mehrerer Messungen bei verschiedenen Phasenverschiebungen die Lichtlaufzeit rekonstruiert wird.

15. Verfahren nach Anspruch 11 oder 12,
wobei das erste Signal als Codemuster und das zweite Signal als dasselbe Codemuster mit unterschiedlicher Phasenverschiebung zu dem ersten Signal erzeugt wird, und wobei durch Messung bei mehreren Phasenverschiebungen aus einem jeweiligen Mittelwert des Auswertungssignals eine Korrelationsfunktion erzeugt und aus deren Korrelationsmaximum die Lichtlaufzeit bestimmt wird, insbesondere durch Rekonstruktion des Korrelationsmaximums mittels Interpolation.

## Claims

1. An optoelectronic sensor (10) for a distance measurement of objects in a monitored zone (22) in accordance with a time of flight of light process, wherein the sensor (10) has a light transmitter (18) with a transmitted light modulation unit (16) for transmitting transmitted light (209) modulated by a first signal; a light receiver (26) with a reception sensitivity modulation unit (28) for receiving light (24) from the monitored zone (22) with a reception sensitivity modulated by a second signal so that the light receiver (26) acts as a mixer and outputs an evaluation signal mixed from the first and the second signals; and an evaluation unit (34) for determining the time of flight of light from the evaluation signal,
**characterised in that**
the light receiver (26) has a plurality of avalanche photodiode elements which are each biased with a bias voltage above a breakdown voltage and are thus operated in a Geiger mode; **in that** the second signal modulates the reception sensitivity by modulation of the bias voltage in a linearity range above the breakdown voltage; and **in that** the evaluation signal is a common signal of the avalanche photodiode elements.

2. A sensor (10) in accordance with claim 1,
wherein the avalanche photodiode elements have a breakdown voltage of at most 70 V, in particular of at most 50 V, 30 V or 15 V.

3. A sensor (10) in accordance with claim 1 or claim 2,
wherein the avalanche photodiode elements are manufactured in a CMOS process, in particular as a matrix structure on a common substrate.

4. A sensor (10) in accordance with any one of the preceding claims,
wherein a frequency generator (14) is provided to generate a sine modulation with a first frequency (f1) as a first signal and a sine modulation with a second frequency (f2) different from the first frequency (f1) as a second signal, wherein in particular the first frequency (f1) and the second frequency (f2) are derived synchronously with one another from a common clock source (12).

5. A sensor (10) in accordance with claim 4,
wherein a filter element (30), in particular a low-pass filter or a rectifier, is disposed downstream of the light receiver (26) to obtain the evaluation signal as an intermediate frequency signal with suppressed portions of the first signal and of the second signal.

6. A sensor (10) in accordance with any one of the claims 1 to 3,
wherein a frequency generator (14) is provided to generate the first signal and the second signal as a sine modulation of the same frequency (f) with different phase shifts from one another; and wherein the evaluation unit (34) is configured to average the evaluation signal and to reconstruct the time of flight of light from the average values of a plurality of measurements at different phase shifts.

7. A sensor (10) in accordance with any one of the claims 4 to 6,
wherein the light transmitter (18) is configured for a burst mode in which transmission breaks are provided in the transmission of the modulated transmitted light and a defined synchronous start of the first signal and of the second signal is provided at the respective end of a transmission break.

8. A sensor (10) in accordance with any one of the claims 1 to 3,
wherein a code pattern generator (36) is provided in which the first signal can be generated as a code pattern and the second signal can be generated as the same code pattern with different phase shifts from the first signal; and wherein the evaluation unit (34) is configured to generate a correlation function from a respective average value of the evaluation signal at a plurality of phase shifts and to determine the time of flight of light from its correlation maximum with in particular the correlation maximum being reconstructed by interpolation.

9. A sensor (10) in accordance with any one of the preceding claims,
wherein the avalanche photodiodes are divided into a plurality of groups; and wherein the reception sensitivity modulation unit (28) is configured to control the groups with different second signals in particular with different phasings of the second signals.

10. A sensor (10) in accordance with any one of the preceding claims,
wherein the light receiver (26) is configured to recognise the position of a detected light spot by which avalanche photodiode element generates a signal; and wherein the evaluation unit (34) is configured to determine the distance by means of triangulation from the position of the light spot.

11. A method for the distance measurement of objects in a monitored zone (22) in accordance with a time of flight of light method, in
which modulated transmitted light (20) is transmitted with a first signal and light (24) remitted at the object is received in a light receiver (26) whose reception sensitivity is modulated by a second signal such that the light receiver (26) acts as a mixer and outputs an evaluation signal mixed from the first signal and from the second signal; and wherein the time of flight of light is determined from the evaluation signal,
**characterised in that**
the remitted light (24) is registered in a plurality of avalanche photodiode elements of the light receiver (26) which are each biased by a bias voltage above a breakdown voltage and are thus operated in a Geiger mode; **in that** the reception sensitivity is modulated by means of modulation of the bias voltage with the second signal in a linearity range above the breakdown voltage; and **in that** the output signals of the avalanche photodiode elements jointly generate the evaluation signal.

12. A method in accordance with claim 11,
wherein the breakdown voltage amounts to at most 70 V, in particular at most 50 V, 30 V or 15 V.

13. A method in accordance with claim 11 or claim 12,
wherein the first signal is generated as a sine modulation with a first frequency (f1) and the second signal is generated as a sine modulation with a second frequency (f2) different from the first frequency (f1) such that an intermediate frequency signal arises as an evaluation signal by the mixing process in the light receiver (26).

14. A method in accordance with claim 11 or claim 12,
wherein the first signal and the second signal are generated as a sine modulation of the same frequency (f) with different phase shifts from one another, with the evaluation signal being averaged at a respective phase shift and the time of flight of light being reconstructed from the mean values of a plurality of measurements at different phase shifts.

15. A method in accordance with claim 11 or claim 12,
wherein the first signal is generated as a code pattern and the second signal is generated as the same code pattern with a different phase shift from the first signal; and wherein a correlation function is generated from a respective mean value of the evaluation signal by measurement at a plurality of phase shifts and the time of flight of light is determined from its correlation maximum, in particular by reconstruction of the correlation maximum by means of interpolation.

## Revendications

1. Capteur optoélectronique (10) pour la mesure d'éloignement d'objets dans une zone de surveillance (22) selon une procédure de temps de parcours de la lumière, dans lequel le capteur (10) comprend un émetteur de lumière (18) avec une unité de modulation de lumière émise (16) pour émettre une lumière émise (209) modulée avec un premier signal, un récepteur de lumière (26) avec une unité de modulation de sensibilité de réception (28) pour recevoir de la lumière (24) depuis la zone de surveillance (22) avec une sensibilité de réception modulée avec un second signal, de sorte que le récepteur de lumière (26) fait office de mélangeur et délivre un signal d'évaluation mélangé à partir du premier et du second signal, et une unité d'évaluation (34) pour déterminer le temps de parcours de la lumière à partir du signal d'évaluation,
**caractérisé en ce que**
le récepteur de lumière (26) comprend une pluralité d'éléments de photodiode à avalanche, qui sont attaqués respectivement avec une tension préliminaire au-dessus d'une tension d'avalanche, et fonctionnent ainsi dans un mode de Geiger, de sorte que le second signal module la sensibilité de réception par modulation de la tension préliminaire dans une plage de linéarité au-dessus de la tension d'avalanche, et **en ce que** le signal d'évaluation est un signal commun des éléments de photodiode à avalanche.

2. Capteur (10) selon la revendication 1,
dans lequel les éléments de photodiode à avalanche présentent une tension de rupture au maximum de 70 V, en particulier au maximum 50V, 30V ou 15V.

3. Capteur (10) selon la revendication 1 ou 2,
dans lequel les éléments de photodiode à avalanche sont produits dans un procédé CMOS, en particulier sous forme de structure matricielle sur un substrat commun.

4. Capteur (10) selon l'une des revendications précédentes,
dans lequel est prévu un générateur de fréquence (14) pour engendrer à titre de premier signal une modulation sinusoïdale avec une première fréquence (f1) et à titre de second signal une modulation sinusoïdale avec une seconde fréquence (f2) qui n'est pas égale à la première fréquence (f1), et en particulier la première fréquence (f1) et la seconde fréquence (f2) sont dérivées de façon synchrone l'une par rapport à l'autre depuis une source d'horloge commune (12).

5. Capteur (10) selon la revendication 4,
dans lequel un élément de filtre (30) est agencé à la suite du récepteur de lumière (26), en particulier un filtre passe-bas ou un redresseur, afin d'obtenir le signal d'évaluation sous forme de signal à fréquence intermédiaire dans lequel des parts du premier et du second signal sont supprimées.

6. Capteur (10) selon l'une des revendications 1 à 3,
dans lequel il est prévu un générateur de fréquence (14) pour engendrer le premier signal et le second signal à titre de modulation sinusoïdale d'une même fréquence (f) avec des décalages de phase différents l'un par rapport à l'autre, et dans lequel l'unité d'évaluation (34) est réalisée pour faire une moyenne du signal d'évaluation et pour reconstruire le temps de parcours de la lumière à partir des valeurs moyennes de plusieurs mesures pour des décalages de phase différents.

7. Capteur (10) selon l'une des revendications 4 à 6,
dans lequel l'émetteur de lumière (18) est réalisé pour un mode en salve dans lequel sont prévues des pauses d'émission dans l'émission de la lumière émise modulée, et dans lequel il est prévu respectivement à la fin d'une pause d'émission un départ synchrone défini du premier signal et du second signal.

8. Capteur (10) selon l'une des revendications 1 à 3,
dans lequel il est prévu un générateur de motif codé (36), dans lequel le premier signal peut être engendré sous forme de motif codé et le second signal peut être engendré sous forme du même motif codé avec des décalages de phase différents par rapport au premier signal, et dans lequel l'unité d'évaluation (34) est réalisée, pour plusieurs décalages de phase, pour engendrer une fonction de corrélation à partir d'une valeur moyenne respective du signal d'évaluation, et pour déterminer à partir de leur maximum de corrélation le temps de parcours de la lumière, et le maximum de corrélation est en particulier reconstruit par interpolation.

9. Capteur (10) selon l'une des revendications précédentes,
dans lequel les photodiodes à avalanche sont subdivisées en plusieurs groupes, et dans lequel l'unité de modulation de sensibilité de réception (28) est réalisée pour piloter les groupes avec des seconds signaux différents, en particulier avec des seconds signaux présentant des situations de phase différentes.

10. Capteur (10) selon l'une des revendications précédentes,
dans lequel le récepteur de lumière (26) est réalisé pour reconnaître la position d'une tache lumineuse détectée à celui des éléments de photodiode à avalanche qui engendre un signal, et dans lequel l'unité d'évaluation (34) est réalisée pour déterminer l'éloignement au moyen d'une triangulation à partir de la position de la tache lumineuse.

11. Procédé pour la mesure d'éloignement d'objets dans une zone de surveillance (22) selon une procédure de temps de parcours de la lumière, dans lequel on émet une lumière émise (20) modulée avec un premier signal et on reçoit la lumière (24) réémise par l'objet dans un récepteur de lumière (26) dont la sensibilité de réception est modulée avec un second signal, de sorte que le récepteur de lumière (26) fait office de mélangeur et délivre un signal d'évaluation mélangé à partir du premier et du second signal, et on détermine le temps de parcours de la lumière à partir du signal d'évaluation,
**caractérisé en ce que** la lumière réémise (24) est enregistrée dans une pluralité d'éléments de photodiode à avalanche du récepteur de lumière (26), qui sont respectivement attaqués par une tension préliminaire au-dessus d'une tension d'avalanche et fonctionnent ainsi dans un mode de Geiger, **en ce que** la sensibilité de réception est modulée au moyen d'une modulation de la tension préliminaire avec le second signal dans une plage de linéarité au-dessus de la tension d'avalanche, et **en ce que**
les signaux de sortie des éléments de photodiode à avalanche engendrent conjointement le signal d'évaluation.

12. Procédé selon la revendication 11,
dans lequel la tension d'avalanche s'élève au maximum à 70 V, en particulier au maximum à 50 V, 30 V ou 15 V.

13. Procédé selon la revendication 11 ou 12,
dans lequel le premier signal est engendré sous forme d'une modulation sinusoïdale avec une première fréquence (f1) et le second signal est engendré sous forme d'une modulation sinusoïdale avec une seconde fréquence (f2) qui n'est pas égale à la première fréquence (f1), de sorte qu'il apparaît un signal à fréquence intermédiaire à titre de signal d'évaluation en raison du processus de mélange dans le récepteur de lumière (26).

14. Procédé selon la revendication 11 ou 12,
dans lequel le premier signal et le second signal sont engendrés sous forme d'une modulation sinusoïdale d'une même fréquence (f) avec des décalages de phase différents l'un par rapport à l'autre, dans lequel le signal d'évaluation est moyenné à chaque décalage de phase, et dans lequel on reconstruit le temps de parcours de la lumière à partir des valeurs moyennes de plusieurs mesures pour des décalages de phase différents.

15. Procédé selon la revendication 11 ou 12,
dans lequel le premier signal est engendré sous forme de motif codé et le second signal est engendré sous forme du même motif codé avec un décalage de phase différent par rapport au premier signal, et dans lequel on engendre, par mesure pour plusieurs décalages de phase, une fonction de corrélation à partir d'une valeur moyenne respective du signal d'évaluation, et à partir de leur maximum de corrélation on détermine le temps de parcours de la lumière, en particulier par reconstruction du maximum de corrélation par interpolation.
